Europäisches Patentamt

European Patent Office

Office européen des brevets

(19)

(11) Veröffentlichungsnummer: **0 211 182**
**A2**

(12) **EUROPÄISCHE PATENTANMELDUNG**

(21) Anmeldenummer: 86107854.1

(22) Anmeldetag: 09.06.86

(51) Int. Cl.⁴: **B 27 B 19/09**
**B 23 D 61/12**
**//A01G3/08**

(30) Priorität: 31.07.85 DE 3527323

(43) Veröffentlichungstag der Anmeldung:
**25.02.87 Patentblatt 87/9**

(84) Benannte Vertragsstaaten:
**AT BE CH DE FR GB IT LI LU NL SE**

(71) Anmelder: Steiner, Walter
Säntisstrasse 52
CH-8311 Brütten(CH)

(72) Erfinder: Steiner, Walter
Säntisstrasse 52
CH-8311 Brütten(CH)

(74) Vertreter: Rottmann, Maximilian R.
c/o Rottmann + Quehl AG Glattalstrasse 37
CH-8052 Zürich(CH)

(54) **Astsäge.**

(57) Die Astsäge (1) hat ein im spitzen Winkel zu ihrem Sägeblatt (9) angeordnetes Führungsglied (22), so dass ein zu zersägender Ast (23) in einer maulartigen Arbeitsöffnung (24) aufgenommen wird und die Astsäge (1) in Längsrichtung ihrer langgestreckten Antriebsübertragung (6) gegen den zu zersägenden Ast (23) drückbar ist. Das Führungsglied (22) ist vorzugsweise länger als das Sägeblatt (9) und kann gegebenenfalls schwenkbar und/oder bezüglich der Winkellage einstellbar oder aber elastisch verformbar ausgebildet sein.

FIG. 2

EP 0 211 182 A2

# A S T S Ä G E

Die vorliegende Erfindung betrifft eine Astsäge mit einem Gehäuse, das einen Antrieb zur Erzeugung einer hin- und hergehenden Bewegung aufnimmt, einem mit dem Antrieb verbundenen Sägeblatt und zumindest einem im Bereich des Sägeblattes angeordneten Führungsglied für den zu durchtrennenden Ast.

Bekannte Astsägen haben den Nachteil, dass das Sägeblatt beim Sägen in Richtung quer zu seiner Arbeitsbewegung gegen den abzusägenden Ast gedrückt werden muss. Besonders wenn zwischen dem von Hand gehaltenen Antriebsmotor und dem Sägeblatt eine den Abstand zwischen einem hochgelegenen Baumast und der bedienenden Person überbrückende, langgestreckte Antriebsübertragung vorhanden ist, führt dieser quergerichtete Arbeitsdruck bald zur Ermüdung. Ausserdem lässt in einem solchen Fall der entsprechend lange Hebelarm nur einen begrenzten Arbeitsdruck zu. Im Moment der Durchtrennung des Astes besteht weiterhin die Gefahr, dass der plötzlich aufgehobene Gegendruck zu einer unkontrollierten und gefährlichen Schwenkbewegung der Astsäge führt.

Eine Säge zum Abtrennen von Ästen von Bäumen der gattungsgemässen Art ist aus dem DE-GM 81 32 511.8 bekannt. Bei dieser Säge sind jedoch nur vergleichsweise kurze, senkrecht zur Bewegungsrichtung des Sägeblattes abstehende, hakenförmig ausgebildete
Stummel (Anschlagleisten zum Anlegen an die abzutrennenden
Äste) als Führungsglieder vorhanden, die im übrigen lediglich
die Aufgabe haben, das Ergreifen und Herunterziehen
abgetrennter Äste zu erleichtern. Mit dieser Konstruktion
können die ein- gangs genannten Probleme nicht gelöst werden.

Ein weiterer Nachteil bei dieser Säge ist die verhältnismässig
breite Ausladung dieser beidseitig abstehenden Anschlagleisten,
die ein Heranführen des Sägeblattes bei dicht beasteten Bäumen
an den zu durchtrennenden Ast erschweren.

Der Erfindung liegt die Aufgabe zugrunde, die Nachteile von bekannten Astsägen zu vermeiden und folglich eine Astsäge zu finden, die leichter zu handhaben sowie universeller einzusetzen
ist und deren Betrieb mit verringertem Unfallrisiko verbunden
ist.

Ausgehend von der Überlegung, dass eine Schubkraft in Richtung
zum Ast hin oder eine Zugkraft in Richtung vom Ast weg von der
Bedienungsperson müheloser, dosierter und mit geringerem Unfallrisiko aufzubringen ist, wird die erfindungsgemässe Aufgabe
bei einer Astsäge der eingangs genannten Art überraschend einfach dadurch gelöst, dass mindestens ein Teilabschnitt des Führungsgliedes im spitzen Winkel zum Sägeblatt verläuft bzw. in
eine solche Stellung verschwenkbar ist, so dass das Führungsglied bzw. dessen Teilabschnitt und das Sägeblatt gemeinsam eine maulartige Arbeitsöffnung bilden.

Damit ist erreicht, dass je nach Anordnung des Führungsgliedes die Astsäge zum Ast hin gestossen oder vom Ast weggezogen werden muss, wobei Sägeblatt und Führungsglied zusammen eine Zwangsführung bilden, die den Ast aufnimmt und unter Wirkung des Sägeblattes durchtrennt.

Eine für höher gelegene Äste geeignete Ausführung der erfindungsgemässen Astsäge zeichnet sich dadurch aus, dass das Führungsglied und das Sägeblatt in einer Kupplungsmuffe aufgenommen sind, die am Ende einer langgestreckten Antriebsübertragung vorgesehen ist, welche einen starr mit dem Gehäuse verbundenen Tragteil und eine darin hin- und her beweglich gelagerte Antriebsstange aufweist.

Damit ein zu durchtrennender Ast leichter erfasst werden kann, sieht eine Weiterbildung des Erfindungsgegenstandes vor, dass das Führungsglied länger ist als das Sägeblatt.

Ein besonders leichtes Führen der Astsäge bei dichtbeasteten Bäumen lässt sich durch die Massnahme erreichen, dass das Führungsglied schwenkbar gelagert ist und unter Wirkung eines Federorgans steht, welches das Führungsglied in eine zum Sägeblatt parallele Lage zu verschwenken bestrebt ist. Damit kann der Wirkteil der Astsäge, nämlich das Sägeblatt und das Führungsglied, auch durch engste Zwischenräume zum abzusägenden
Ast geführt werden, ohne an benachbarten Ästen hängenzubleiben.

Eine Weiterbildung der erfindungsgemässen Astsäge sieht vor,
dass das Sägeblatt doppelseitig ist, indem beide seiner Längskanten als Bearbeitungskanten ausgebildet sind. Dabei kann eine
der Bearbeitungskanten als Sägekante und die andere Bearbeitungskante als Messerschneide ausgebildet oder es können die
beiden Bearbeitungskanten als Sägekanten mit unterschiedlich
feiner Zahnung ausgebildet sein, um gleichermassen dickere oder
dünnere bzw. Äste unterschiedlicher Beschaffenheit sauber und
mühelos abzutrennen.

Im übrigen sind weitere Ausgestaltungen und besondere Ausführungsarten der erfindungsgemässen Astsäge in den abhängigen Ansprüchen 2 bis 25 definiert.

Im folgenden wird der Erfindungsgegenstand anhand von in der
Zeichnung dargestellten Ausführungsbeispielen näher erläutert.
Es zeigen:

Fig. 1     eine vereinfachte Gesamtansicht der erfindungsgemässen Astsäge,

Fig. 2     eine vereinfachte Gesamtansicht einer erweiterten
           Ausführungsform,

Fig. 3      einen Längsschnitt durch einen Teil der Astsäge im Bereich ihres Sägeblattes,


Fig. 4      einen Längsschnitt durch einen Teil einer zweiten Ausführungsform einer erfindungsgemässen Astsäge, und


Fig. 5-8    schematische Ansichten von Vorderteilen von weiteren,

            abgewandelten Ausführungsformen der erfindungsgemässen Astsäge.


Die in den Zeichnungen nur schematisch dargestellte Astsäge 1
hat einen elektromotorischen Antrieb, dessen Motor und mechanische Antriebsübertragung zur Erzeugung einer hin- und hergehenden Bewegung in einem gemeinsamen Antriebsgehäuse 2 zusammengefasst sind, an deren hinterem Ende ein Handgriff 3 angeformt
ist. Ein im Handgriff vorgesehener Schalter 4 dient zur An- und
Abschaltung des Elektromotors. Ein derartiger Antrieb ist in
zahlreichen Ausführungsformen bekannt und ist z.B. an Stichsägen zu finden.


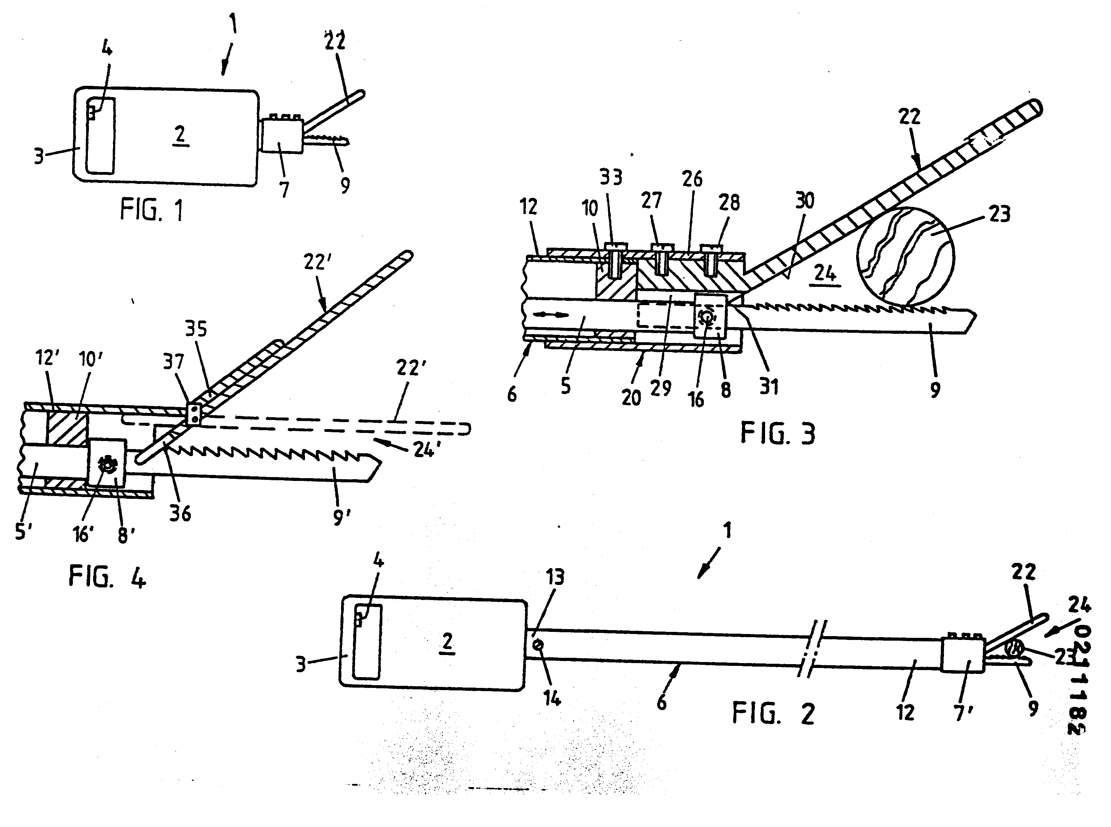

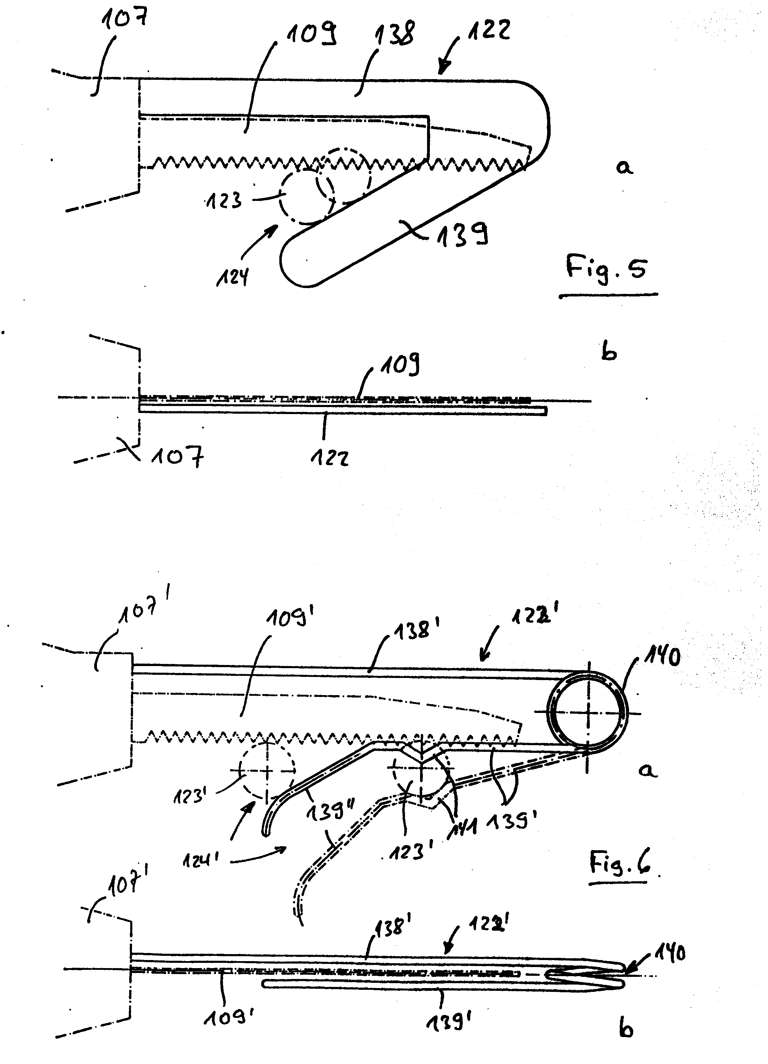

Bei der Ausführung gemäss Fig. 1 ist am nicht dargestellten Antriebszapfen der Antriebseinheit 2 an Stelle eines Stichsägeblattes eine Kupplungsmuffe 7 befestigt, die einerseits das
Sägeblatt 9 aufnimmt und dieses mit dem Antriebszapfen verbindet, und andererseits mit einem Führungsglied 22 versehen ist,
das langgestreckte Gestalt besitzt und sich in spitzem Winkel
von der Wurzel des Sägeblattes 9 weg gegen vorne erstreckt.

Beim in den Fig. 2 und 3 dargestellten Ausführungsbeispiel ist an der Antriebseinheit 2 die Stange 5 einer langgestreckten Antriebsübertragung 6, z.B. mittels einer seitlichen Andruckschraube 14, befestigt, die sich seitlich an einem Kupplungsfutter befindet, das gleichartig ausgeführt ist wie das Kupplungsfutter 8 (Fig. 3) für die Befestigung des Sägeblattes 9 am entgegengesetzten Ende dieser Stange 5.

Die Stange 5 der Antriebsübertragung 6 ist in mindestens einem Führungskörper 10 axialbeweglich gelagert, der in einem starr mit dem Gehäuse der Antriebseinheit 2 verbundenen Rohr 12 gehalten ist. Die starre Verbindung des Rohres 12 mit dem Gehäuse der Antriebseinheit 2 kann auf verschiedene an sich bekannte Arten erfolgen. Beispielsweise wird das Ende 13 des Rohres 12 auf einen am Ende der Antriebseinheit 2 befestigten, zylindermantelförmigen Bund aufgeschoben und an diesem bajonettartig verriegelt oder mittels einer Andruckschraube 14 gesichert.

Gemäss Fig. 3 ist eine Hülse 20 vorgesehen, die vor allem dazu dient, ein im spitzen Winkel zum Sägeblatt 9 angeordnetes Führungsglied 22 am dem Antrieb 2 abgekehrten Ende des Rohres 12 zu befestigen. Durch dieses Führungsglied 22, das vorzugsweise länger ist als die Arbeitslänge des Sägeblattes 9, lässt sich der zu sägende Ast 23 leicht erfassen und gegen das Sägeblatt 9 drücken, indem die Astsäge in ihrer Längsrichtung in etwa radial gegen den Ast 23 gedrückt wird. Mit dem Fortschreiten der Sägearbeit dringt dabei der Ast 23 zunehmend in die maulartige Arbeitsöffnung 24 ein, die spitzwinklig zwischen dem Führungsglied 22 und dem Sägeblatt 9 gebildet ist, bis der Ast 23
durchsägt ist.

Das Führungsglied 22 hat beispielsweise entsprechend der Darstellung in Fig. 3 ein abgewinkeltes inneres Ende 26, das mittels zweier Schrauben 27, 28 an der Innenseite der Hülse 20 befestigt ist. Eine zur Bewegungsrichtung der Stange 5 parallele
Nut 29 im abgewinkelten Ende 26 des Führungsgliedes 22 ermöglicht eine unbehinderte Bewegung des Kupplungsfutters 8, obwohl
sich die innere Führungsfläche 30 des Führungsgliedes 22 und
das Sägeblatt 9 in einem Scheitelbereich 31 treffen.

Zum Auswechseln des Sägeblatts 9 wird die Hülse 20 und somit
auch das Führungsglied 22 vom Rohr 12 gelöst, so dass die Andruckschraube 16 des Kupplungsfutters 8 gelöst werden kann. Das
Kupplungsfutter 8 kann hierfür durch eine bajonettartige Verriegelung oder eine lösbare Schraube 33 mit dem Rohr 12 verbunden sein.

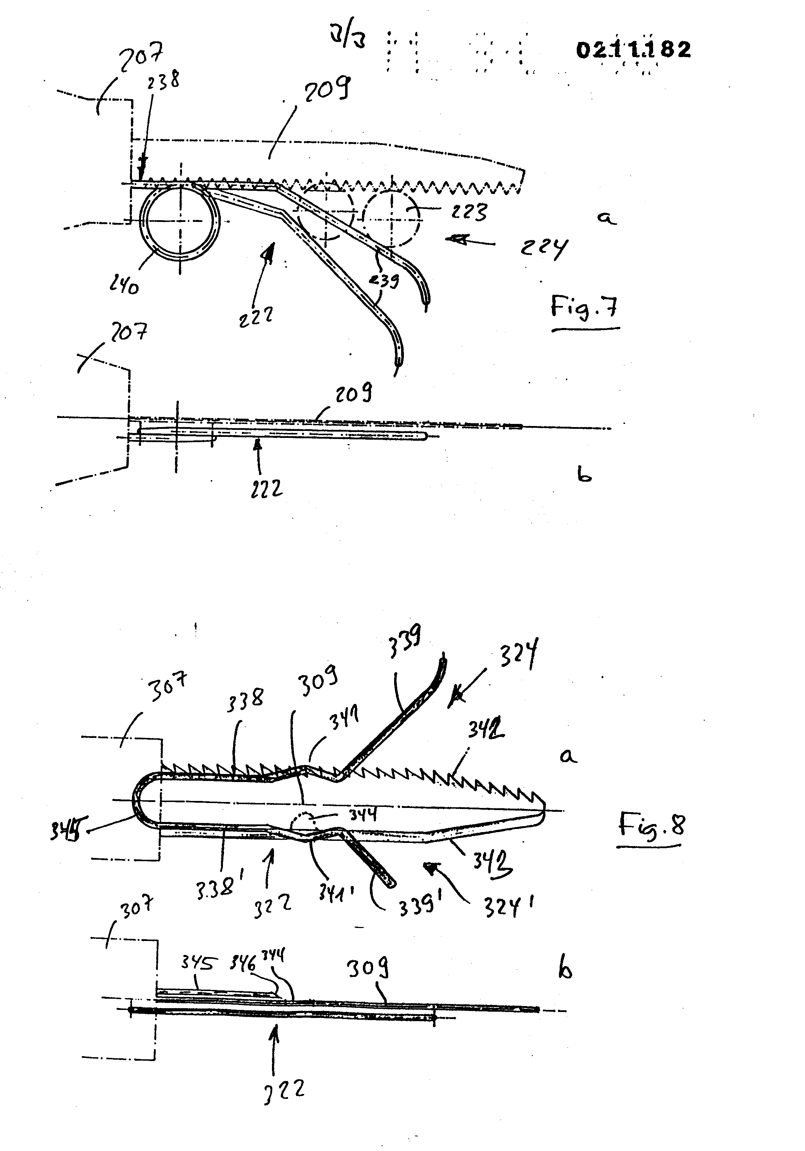

Das Führungsglied 22' kann jedoch gemäss Fig. 4 auch unmittelbar am Rohr 12' befestigt sein, falls an dessen Ende seitlich
eine Öffnung vorgesehen ist, durch die hindurch die Andruckschraube 16' des Kupplungsfutters 8' für ein Werkzeug zugänglich ist. Fig. 4 zeigt ein Beispiel einer derartigen Ausführungsform. Das Rohr 12', das die starre Verbindung mit der Antriebseinheit 2 herstellt, ist an seinem Ende seitlich ausgeschnitten und der verbliebene, zungenförmige Teil 35 ist nach
oben unter dem Winkel abgebogen, den das Führungsglied 22' mit
dem Sägeblatt 9' einschliessen soll. Dieses Führungsglied 22'
ist an der Innenseite dieses zungenförmigen Teils 35 durch ein
federndes Verankerungsteil 37 schwenkbar befestigt. Das zungenförmige Teil 35 hat die Form eines langgestreckten Steges und
weist an seinem inneren Ende eine Aussparung 36 auf, durch die
hindurch sich das Kupplungsfutter 8' bewegt. Ausserdem wirkt
das zungenförmige Teil 35 als Anschlag für das Führungsglied
22'.

Das federnde Teil 37 hat das Bestreben, das Führungsglied 22'
in die gestrichelt gezeichnete Lage in Fig.4, d.h. parallel zum
Sägeblatt 9', zu verschwenken. Somit ist ein Einfahren des Vorderteils der Astsäge zwischen anderen Zweigen hindurch wesentlich erleichtert, da das Führungsglied 22' im Ruhezustand eingeschwenkt ist und somit in radialer Richtung praktisch keinen
Platz beansprucht. Dadurch, dass das Führungsglied 22' länger
ist als das Sägeblatt 9', kann der vorderste Abschnitt des Führungsgliedes 22' an den abzusägenden Ast angelegt werden, um
das Führungsglied 22' in die in Fig.4 ausgezogen gezeichnete
Wirklage zu bringen; der Ast wird dadurch in der maulartigen
Arbeitsöffnung 24' aufgenommen und durch Ausübung eines Druckes
in der Längsrichtung der Antriebsübertragung 6 gehalten und
durchgesägt.

Das Führungsglied 22 bzw. 22' kann in Anpassung an den Anwendungsbereich der Astsäge, d.h. in Anpassung an den zu erwartenden Durchmesser der abzusägenden Äste 23, unter verschiedenen
Winkeln relativ zum Sägeblatt 9 bzw. 9' angestellt und hierfür
gegebenenfalls auch winkelverstellbar mit dem Rohr 12 bzw. 12'
verbunden sein. Statt geradlinig kann das Führungsglied 22 bzw.
22' auch gekrümmt ausgeführt sein, so dass ein sich stetig
ändernder Winkel gegenüber dem Sägeblatt 9 bzw. 9' vorhanden
ist.

In den dargestellten Beispielen verwendet die erfindungsgemässe
Astsäge ein Sägeblatt 9 bzw. 9', wie es für Stichsägen üblich
ist. Das Sägeblatt kann jedoch auch für die Astsäge speziell
ausgeführt sein und entsprechend eine wesentlich grössere Länge
aufweisen, mit einem entsprechend angepassten System der Befestigung mit der Stange 5 bzw. 5'.

Weiterhin kann das Rohr 12, das den oder die Führungskörper 10
für die die Antriebsbewegung übertragende Stange 5 trägt, auch
durch eine Stange ersetzt werden, die parallel zu dieser Stange
5 verläuft und mit ihrem einen Ende starr mit dem Gehäuse verbindbar ist, so dass der oder die Führungskörper 10 an einer
solchen Stange befestigt sind.

Eine Weiterbildung der erfindungsgemäss ausgebildeten Astsäge
kann ferner darin erblickt werden, dass die Rohr- oder Stabförmige Antriebsübertragung 6 mehrteilig ausgebildet ist, indem
sie aus mehreren, miteinander verbindbaren Teilstücken besteht.

Die Verbindung zwischen den einzelnen Teilstücken kann dabei
durch an sich bekannte Kupplungsmittel erfolgen, so dass die
Möglichkeit gegeben ist, die Astsäge an den vorgesehenen Verwendungsbereich anzupassen, indem, je nach Höhenlage der abzusägenden Äste, die Länge der Antriebsübertragung durch Einfügung zusätzlicher oder durch Entfernung von vorhandenen Antriebsübertragungs-Teilstücken angepasst wird.

In den Fig. 5 bis 8 sind schematisch verschiedene Weiterbildungen des Erfindungsgegenstandes dargestellt, jeweils in einer
Seitenansicht und einer Ansicht von oben des Endteiles der Astsäge, d.h. der Kupplungsmuffe, des Sägeblattes und des Führungsgliedes.

Währenddem in den Fig. 1 bis 4 eine Ausführung der Astsäge beschrieben wurde, die eine gegen vorne gerichtete, maulartige
Arbeitsöffnung 24 bzw. 24' hatte, die die Ausübung eines Drukkes in Richtung auf den abzusägenden Ast hin erfordert, zeigen
die Fig. 5 und 6 eine Ausführung mit nach hinten gerichteter,
maulartiger Arbeitsöffnung 124 bzw. 124'. Dadurch kann der abzutrennende Ast 123 bzw. 123' hakenartig erfasst werden, wobei
auf die Astsäge eine Zugkraft auszuüben ist. Gerade bei hoch
gelegenen oder starken Ästen mag dies angenehmer sein.

Die Ausführung gemäss Fig. 5 besitzt wiederum ein zu einer
hin- und hergehenden Bewegung angetriebenes Sägeblatt 109, das
in entsprechender Weise in einer Kupplungsmuffe 107 aufgenommen ist. An dieser ist ein in diesem Beispiel starres Führungsglied
122 gelagert, welches einen ersten Abschnitt 138 aufweist,
dessen eines Ende in der Kupplungsmuffe 107 verankert ist und
der sich parallel neben dem Sägeblatt 109 verlaufend bis in den
Bereich dessen Endes erstreckt. An diesen ersten Abschnitt 138
schliesst sich ein zweiter Abschnitt 139 an, der mit dem ersten
Abschnitt 138 und damit mit dem Sägeblatt 109 einen spitzen
Winkel einschliesst. Dadurch ist die maulartige Arbeitsöffnung
124 gebildet, in welche der abzusägende Ast 123 einzuführen
ist. Wie aus Fig. 5b ersichtlich liegt das Führungsglied 122,
das als flaches Metall- oder Kunststoffteil ausgebildet sein
kann, etwas neben dem Sägeblatt 109, um dessen Bewegung nicht
zu behindern.

Eine ähnliche Ausführung ist in Fig. 6 gezeigt. Hier ist das
Führungsglied 122' durch einen drahtartigen Körper, z.B. durch
einen Federstahldraht gebildet und umfasst einen ersten Abschnitt 138', der wiederum an der Kupplungsmuffe 107' verankert
ist und sich parallel zum Sägeblatt 109' bis in den Bereich
dessen Endes erstreckt. Dort schliesst sich ein gewundener Abschnitt 140 an, z.B. in der Form einer Spiralfeder, der
schliesslich in einen zweiten Abschnitt 139' übergeht. Dieser
erstreckt sich teilweise auch parallel zum Sägeblatt 109', aber
auf der anderen Seite als der erste Abschnitt 138', nämlich auf
der mit der Verzahnung versehenen Seite des Sägeblattes 109'.
Ein Endbereich 139" des zweiten Abschnittes 139' ist so vom
Sägeblatt 109' weggebogen, dass er mit diesem einen spitzen Winkel einschliesst, so dass wiederum die maulartige Arbeitsöffnung 124' gebildet ist.

Der gewundene Abschnitt 140 bildet ein elastisches Gelenk, um
dessen Achse sich der zweite Abschnitt 139' verschwenken lässt.
Diese Situation ist in Fig. 6 gestrichelt dargestellt. Damit
lässt sich erreichen, dass der zu durchtrennende Ast 123' mit
einer gewissen Kraft gegen das Sägeblatt 109' gepresst wird.
Dies erleichtert die Handhabung der Astsäge, indem während des
Sägens keine oder eine nur geringe Zugkraft erforderlich ist.
Ausserdem ist die Gefahr eines Verklemmens des Sägeblattes wesentlich geringer. Unterstützt wird dieser Effekt noch durch
eine im zweiten Abschnitt angebrachte Ausbuchtung 141, die den
Ast 123' umgreift, wie es in Fig. 6 gestrichelt dargestellt ist.

Die Ausführungsform gemäss Fig. 7 ist ähnlich wie diejenige in
Fig. 6, jedoch erstreckt sich hier der erste Abschnitt 238 des
Führungsgliedes 222, von der Kupplungsmuffe 207 ausgehend, nur
ein kurzes Stück dem Sägeblatt 209 entlang, um in einen gewundenen, spiralfederartigen Abschnitt 240 überzugehen. An diesen
schliesst sich in entsprechender Weise ein spitzwinklig abgebogener, zweiter Abschnitt 239 an, der zusammen mit dem Sägeblatt 209 eine maulartige Arbeitsöffnung 224 bildet, um den zu
durchtrennenden Ast 223 aufzunehmen. Durch die elastische Verformung bzw. Verschwenkung des zweiten Abschnittes 239 wird der
Ast 223 gegen das Sägeblatt 209 gepresst, was das durchtrennen
erleichtert und einen gleichmässigen Anpressdruck sicherstellt.

Selbstverständlich kann auch hier eine (in der Fig. 7 nicht dargestellte) Ausbuchtung, ähnlich wie in Fig. 6 (141) gezeigt, vorhanden sein.

Die Fig. 8 schliesslich zeigt eine weitere Variante, bei der das Sägeblatt 309 doppelseitig wirksam ist. Die eine Arbeitskante 342 ist sägeblattartig gezahnt, während die andere Arbeitskante 343 als Messerschneide ausgebildet ist. Selbstverständlich ist es auch möglich, die beiden Arbeitskanten 342 und 343 mit unterschiedlicher Zahnung auszubilden, um Äste unterschiedlicher Dicke und/oder Materialbeschaffenheit optimal durchtrennen zu können. Die Messerschneide 343 kann auch mit einer zugeschliffenen Ausklinkung 344 versehen sein (gestrichelt in Fig. 8a), um dünne Äste abzuscheren. Zweckmässigerweise ist in diesem Fall parallel, in geringem Abstand, neben dem Sägeblatt 309 ein stationäres Gegenmesser 345 angeordnet, dessen Vorderkante 346 sich in etwa bis zur Ausklinkung 344 erstreckt, sodass die zugeschliffene Kante der Ausklinkung 344 und die Vorderkante 346 in der Art einer Schere zusammenwirken, um sehr dünne und damit biegsame Äste abschneiden zu können.

Bei Verwendung eines doppelseitigen Sägeblattes 309 ist zweckmässigerweise auch das Führungsglied 322 doppelseitig ausgebildet. Beim Beispiel gemäss Fig. 8 ist ein Wurzelteil 345 des Führungsgliedes 322, das z.B. auch aus Federstahldraht bestehen kann, in der Kupplungsmuffe 307 verankert. Von diesem Wurzelteil erstrecken sich, parallel zum Sägeblatt 309 verlaufend, erste Abschnitte 338 und 338' beidseitig des Sägeblattes 309, an die sich zweite Abschnitte 339 und 339' anschliessen, die je gegensinnig, vom Sägeblatt 309 weg gerichtet, spitzwinklig abgebogen sind, um wiederum maulartige Arbeitsöffnungen 324 und 324' zu bilden. Die ersten Abschnitte 338 und 338' können in entsprechender Weise mit Ausbuchtungen 341 und 341' versehen sein.

Es versteht sich, dass hier nur einige wenige Ausführungsformen beschrieben sind. Vielfältige Kombinationen liegen im Rahmen der Erfindung und sind dem Fachmann ohne weiteres erkenntlich.

P A T E N T A N S P R Ü C H E

1. Astsäge (1) mit einen Gehäuse (2), das einen Antrieb zur Erzeugung einer hin- und hergehenden Bewegung aufnimmt, einem mit dem Antrieb verbundenen Sägeblatt (9, 9', 109, 109', 209, 309) und zumindest einem im Bereich des Sägeblattes angeordneten Führungsglied (22, 22', 122, 122', 222, 322) für den zu durchtrennenden Ast (23, 123, 123', 223), dadurch gekennzeichnet, dass mindestens ein Teilabschnitt (139, 139", 239, 339, 339') des Führungsgliedes (122, 122', 222, 322) im spitzen Winkel zum Sägeblatt (109, 109', 209, 309) verläuft bzw. in eine solche Stellung verschwenkbar ist, so dass das Führungsglied bzw. dessen Teilabschnitt und das Sägeblatt gemeinsam eine maulartige Arbeitsöffnung (24, 24', 124, 124', 224, 324, 324') bilden.

2. Astsäge nach Anspruch 1, dadurch gekennzeichnet, dass das Führungsglied (22, 22') und das Sägeblatt (9, 9') in einer am Gehäuse (2) angeordneten Kupplungsmuffe (7) aufgenommen sind.

3. Astsäge nach Anspruch 1, dadurch gekennzeichnet, dass das Führungsglied (22, 22', 122, 122', 222, 322) und das Sägeblatt (9, 9', 109, 109', 209, 309) in einer Kupplungsmuffe (7', 107, 107', 207, 307) aufgenommen sind, die am Ende einer langgestreckten Antriebsübertragung (6) vorgesehen ist, welche einen starr mit dem Gehäuse (2) verbundenen Tragteil (12, 12') und eine darin hin- und her beweglich gelagerte Antriebsstange (5, 5') aufweist.

4. Astsäge nach einem der Ansprüche 1 - 3, dadurch gekennzeichnet, dass das Führungsglied (22, 22', 122, 122', 222, 322) lösbar an der Kupplungsmuffe (7', 107, 107', 207, 307) befestigt ist.

5. Astsäge nach Anspruch 4, dadurch gekennzeichnet, dass die Kupplungsmuffe (7, 7') eine Hülse (20) aufweist, und dass das Tragteil aus einem die Hülse (20) aufnehmenden Rohr (12, 12') besteht.

6. Astsäge nach Anspruch 3, dadurch gekennzeichnet, dass das Tragteil (12') aus einem Hohlprofil besteht, an dem das Führungsglied (22') angeformt ist.

7. Astsäge nach Anspruch 3, dadurch gekennzeichnet, dass das Tragteil (12') aus einem an seinem Ende seitlich ausgesparten Hohlprofil besteht, wobei der verbliebene Endteil (35) nach aussen abgebogen ist und mit dem Führungsglied (22') verbunden ist.

8. Astsäge nach einem der Ansprüche 1 - 7, dadurch gekennzeichnet, dass das Führungsglied (22, 22', 122, 122') länger ist als das Sägeblatt (9, 9', 109, 109').

9. Astsäge nach einem der Ansprüche 1 - 4 oder 8, dadurch gekennzeichnet, dass das Führungsglied (22', 122', 222, 322,
322') schwenkbar gelagert ist und unter Wirkung eines Federorgans (37, 140, 240) steht, welches das Führungsglied in eine
zum Sägeblatt (9', 109', 209) parallele Lage zu verschwenken
bestrebt ist.

10. Astsäge nach einem der Ansprüche 1 - 9, dadurch gekennzeichnet, dass das Sägeblatt (9, 9', 109, 109', 209) ein Stichsägeblatt ist.

11. Astsäge nach einem der Ansprüche 3 bis 10, dadurch gekennzeichnet, dass die Antriebsübertragung (6) bzw. das Tragteil
(12, 12') mehrteilig und zerlegbar ausgebildet ist bzw. sind,
wobei zwischen den einzelnen Teilen Kupplungsmittel vorgesehen
sind.

12. Astsäge nach einem der vorhergehenden Ansprüche, dadurch
gekennzeichnet, dass das Sägeblatt (309) doppelseitig ist, indem beide seiner Längskanten (342, 343) als Bearbeitungskanten
ausgebildet sind.

13. Astsäge nach Anspruch 12, dadurch gekennzeichnet, dass eine
der Bearbeitungskanten als Sägekante (342) und die andere Bearbeitungskante als Messerschneide (343) ausgebildet ist.

14. Astsäge nach Anspruch 12, dadurch gekennzeichnet, dass die

- 4 -                    0211182

beiden Bearbeitungskanten (342, 343) als Sägekanten mit unterschiedlich feiner Zahnung ausgebildet sind.

15. Astsäge nach Anspruch 13, dadurch gekennzeichnet, dass die Messerschneide (343) mit einer zugeschliffenen Ausklinkung (344) versehen ist.

16. Astsäge nach Anspruch 15, dadurch gekennzeichnet, dass neben dem Sägeblatt (309) ein stationäres Gegenmesser (345) vorgesehen ist, dessen Vorderkante (346) mit der Ausklinkung (344) in der Art einer Schere zusammenwirkt.

17. Astsäge nach einem der vorangehenden Ansprüche, dadurch gekennzeichnet, dass das Führungsglied (122) starr an der Kupplungsmuffe (107) angeordnet ist und einen ersten Abschnitt (138) besitzt, der sich von der Kupplungsmuffe aus im wesentlichen parallel zum Sägeblatt (109) bis in den Bereich dessen Endes erstreckt, sowie einen zweiten Abschnitt (139), der sich vom sägeblattseitigen Ende des ersten Abschnittes, unter einem spitzen Winkel zum genannten ersten Abschnitt geneigt verlaufend, in Richtung der Kupplungsmuffe hin erstreckt.

18. Astsäge nach einem der vorangehenden Ansprüche, dadurch gekennzeichnet, dass das Führungsglied (122', 222, 322) zumindest teilweise aus elastisch deformierbarem Material besteht.

19. Astsäge nach Anspruch 18, dadurch gekennzeichnet, dass das Führungsglied (122', 222) einen Abschnitt (140, 240) besitzt, der in der Form einer Spiralfeder gewunden ist.

20. Astsäge nach Anspruch 18, dadurch gekennzeichnet, dass das Führungsglied (222) starr an der Kupplungsmuffe (207) angeordnet ist und einen ersten Abschnitt (238) besitzt, der sich von der Kupplungsmuffe aus im wesentlichen parallel zum Sägeblatt (209) erstreckt, sowie einen zweiten Abschnitt (239), der sich vom Ende des ersten Abschnittes (238) aus, unter einem spitzen Winkel zum genannten ersten Abschnitt geneigt verlaufend, in Richtung des Sägeblattendes hin erstreckt, wobei der genannte, gewundene Abschnitt (240) innerhalb des genannten ersten Abschnittes (238) liegt.

21. Astsäge nach Anspruch 18, dadurch gekennzeichnet, dass das Führungsglied (122') starr an der Kupplungsmuffe (107') angeordnet ist und einen ersten Abschnitt (138') besitzt, der sich von der Kupplungsmuffe (107') aus im wesentlichen parallel zum Sägeblatt (109') bis in den Bereich dessen Endes hin erstreckt, einen gewundenen Abschnitt (140) im Bereich des Sägeblattendes, und einen zweiten Abschnitt (139'), der sich vom gewundenen Abschnitt (140) aus parallel zum ersten Abschnitt (138') auf der anderen Seite des Sägeblattes (109') gegen die Kupplungsmuffe (107') hin erstreckt, wobei ein endseitiger Teilabschnitt (139") jenes zweiten Abschnittes (139') unter einem spitzen Winkel zum Sägeblatt (109') verläuft.

22. Astsäge nach Anspruch 21, dadurch gekennzeichnet, dass ein anfangsseitiger Teilabschnitt jenes zweiten Abschnittes (139') mit einer vom Sägeblatt (109') weggerichteten Ausbuchtung (141) versehen ist.

23. Astsäge nach einem der vorhergehenden Ansprüche, dadurch gekennzeichnet, dass das Führungsglied (322) doppelseitig ausgebildet ist, mit einem Wurzelbereich (345), der an der Kupplungsmuffe (307) befestigt ist, zwei zu beiden Seiten des Sägeblattes (309) im wesentlichen parallel zu diesem verlaufenden, ersten Abschnitten (338, 338') und mit zwei, sich an die genannten ersten Abschnitte anschliessenden zweiten Abschnitten (339, 339'), die unter einem spitzen Winkel zum Sägeblatt (309) verlaufen.

24. Astsäge nach Anspruch 23, dadurch gekennzeichnet, dass die beiden genannten ersten Abschnitte (338, 338') je mit einer vom Sägeblatt (309) weggerichteten Ausbuchtung (341, 341') versehen sind, die im Bereich des Ueberganges von den ersten in die zweiten Abschnitte liegen.

25. Astsäge nach einem der vorangehenden Ansprüche, dadurch gekennzeichnet, dass die Ebene der Führungsglieder (122, 122', 222, 322) bzw. einzelner Abschnitte (138' 139') derselben seitlich gegenüber der Ebene des Sägeblattes (109, 109', 209, 309) versetzt sind.

0211182

FIG. 1

FIG. 2

FIG. 3

FIG. 4

Fig. 5

Fig. 6

Fig.7

Fig.8